# FASCICULE DE BREVET EUROPEEN

(11) **EP 1 106 342 B1**
(45) Date de publication et mention de la délivrance du brevet: **04.01.2006**
(21) Numéro de dépôt: 00403404.7
(22) Date de dépôt: 05.12.2000
(51) Int. Cl.: B32B 17/10, C03C 27/12

(54) **Vitrage en verre feuilleté pour une structure en verre**
Verbundglasscheibe für eine Glasstruktur
Laminated glass pane for a glass structure

(30) Priorité: 06.12.1999 DE 19958372
(43) Date de publication de la demande: 13.06.2001
(73) Titulaire: SAINT-GOBAIN GLASS FRANCE, 92400 Courbevoie (FR)
(72) Inventeur: Vornholt, Hans, 6471 XL Eygelshoven (NL); Capellmann, Leo, 52146 Würselen (DE)
(74) Mandataire: Cardin, Elise

(56) Documents cités:
- FR-A- 681 790
- GB-A- 842 657
- US-A- 3 498 871

## Description

L'invention se rapporte à un vitrage en verre feuilleté pour une structure en verre présentant les caractéristiques du préambule de la revendication 1.

En architecture, on utilise dans une mesure croissante des façades entièrement vitrées et des éléments de construction en verre, pour lesquels on emploie dans la plupart des cas du verre de sécurité feuilleté, pour des raisons de sécurité. En l'espèce, les ensembles vitrés en verre de sécurité feuilleté doivent être fixés de manière convenable à une infrastructure, à des rails de support ou à une fondation.

Dans un vitrage en verre feuilleté du type mentionné dans l'introduction, connu par le document EP 0 525 690 B1, il est proposé d'insérer, dans la feuille intermédiaire thermoplastique d'un vitrage en verre feuilleté se composant d'au moins deux vitres individuelles, des éléments de support à rigidité propre, qui sont prolongés hors du vitrage en verre feuilleté du côté de la face d'extrémité. Les éléments de support présentent des zones en forme de plaques en matériau plat, avec lesquelles ils sont insérés dans la couche de liaison entre deux vitres individuelles, dans les régions du bord du vitrage en verre feuilleté. En l'occurrence, les éléments de support sont pourvus de trous dans leurs zones noyées dans la couche de liaison, de sorte que la couche de liaison passe à travers ceux-ci et forme, après sa prise, un assemblage indéformable avec les éléments de support. Pour la fabrication de tels éléments vitrés, il ne faut certes pas de perçages ou de trous dans les vitres, mais néanmoins, si l'on a besoin d'éléments de support relativement épais pour la transmission d'efforts ou de couples élevés, la couche de liaison organique doit elle aussi présenter une épaisseur correspondante, pour y loger les éléments de support. Ceci n'est cependant pas dénué de difficultés, parce que la fluidité des couches intermédiaires organiques habituellement utilisées ne suffit pas pour combler les trous. Ainsi, non seulement la résistance de l'élément vitré est réduite, mais en outre il se forme des soufflures, qui dégradent fortement l'aspect esthétique.

L'invention a pour objet de proposer un vitrage en verre feuilleté du type mentionné dans l'introduction, qui ne présente pas les inconvénients précités et qui peut être fabriquée de manière simple.
Conformément à l'invention, cet objectif est atteint par les caractéristiques de la revendication 1. Les caractéristiques des revendications secondaires indiquent des variantes avantageuses de cet objet.

Le vitrage en verre feuilleté conforme à l'invention, pour une structure en verre, se distingue par le fait que l'élément de support est disposé dans une rainure entre deux vitres individuelles, la rainure étant formée en écartant au moins deux vitres individuelles essentiellement par au moins une autre vitre individuelle, appelée par la suite vitre centrale, placée en retrait par rapport au bord du vitrage en verre feuilleté. Les vitres individuelles et l'élément de support sont collés les uns aux autres sur leurs surfaces se faisant mutuellement face respectivement au moyen d'une couche de liaison organique. L'élément de support sort par la tranche hors du vitrage en verre feuilleté ainsi formé. La capacité de charge mécanique de l'élément de support peut être adaptée par son épaisseur à toute sollicitation statique, à cet effet, il faut uniquement modifier la dimension de la rainure en adaptant l'épaisseur de la vitre centrale en retrait et/ou sa distance à partir du bord du vitrage en verre feuilleté.

Il est également possible sans difficulté de combler la région du vitrage en verre feuilleté située dans l'alignement avec l'élément de support au moyen de plusieurs vitres assemblées les unes aux autres, qui forment alors ensemble la vitre centrale.

Par vitre, vitre individuelle et vitre centrale, on vise ici des éléments en forme de plaques, qui se composent de préférence de verre, de vitrocéramique ou de matière plastique, et qui sont de préférence translucides ou transparents. Il est cependant également possible d'utiliser des éléments opaques en forme de plaques en métal ou en une autre matière non transparente. Les différentes matières peuvent également être employées en combinaison dans le vitrage en verre feuilleté conforme à l'invention. Les éléments dénommés vitres individuelles peuvent à leur tour faire à nouveau partie d'un composite du type d'un vitrage en verre feuilleté ou d'un vitrage isolant.

Il s'est avéré particulièrement avantageux de prévoir une bande d'une couche de liaison organique entre les faces d'extrémité d'un élément de support et de la vitre centrale. On remplit ainsi des cavités provoquées par des dilatations thermiques différentes ou par des tolérances de fabrication, de sorte qu'il n'apparaît pas de bulles d'air qui dégradent l'aspect esthétique.

Dans le cas d'une forte sollicitation du collage de l'élément de support et des vitres avec la couche de liaison organique ou lorsque, pour des raisons de sécurité, on désire un second assemblage en plus du collage, on peut installer en supplément un assemblage indesserrabte ou indéformable. Le plus simplement, ceci peut être réalisé au moyen d'un perçage traversant toutes les couches du vitrage en verre feuilleté et l'élément de support. En utilisant un couple vis/écrou, les vitres situées à l'extérieur sont alors serrées contre l'élément de support. De même il est possible d'introduire une cheville dans un perçage exactement ajusté et de garantir ainsi un assemblage indéformable. Une autre solution consiste à forer un trou borgne de façon à ne traverser le vitrage en verre feuilleté qu'à partir d'une face principale et de poursuivre le forage jusque dans l'élément de support. Si l'on désire un assemblage vissé, on réalise un filetage intérieur dans le trou foré dans l'élément de support. Naturellement, il est également possible de réaliser un assemblage à la fois indesserrable et indéformable.

Si le segment de l'élément de support sortant à l'extérieur n'est pas soudé ou coincé sur une structure de support ou sur une infrastructure, il doit être pourvu de moyens destinés à le fixer, comme des trous forés, des écrous à souder ou analogues. Naturellement, on peut également prévoir des régions coudées pour sa fixation, on préfère cependant tes solutions dans lesquelles les éléments de support ne débordent pas au-delà des faces principales du vitrage en verre feuilleté. Les éléments de support ont ainsi de préférence la forme de plaques, et le matériau qui s'est imposé est l'acier allié.

Dans une autre forme de réalisation, une ou plusieurs des vitres du vitrage en verre feuilleté conforme à l'invention est (sont) constituée(s) de verre précontraint. Pour des raisons de sécurité, ceci n'est certes pas nécessaire, parce que les vitres individuelles sont en effet collées l'une à l'autre avec une couche de liaison organique, et la résistance à la traction et à la flexion, la dureté superficielle ainsi que la résistance aux variations de température peuvent être améliorées par ces mesures. La précontrainte peut être appliquée par voie chimique ou thermique, la précontrainte thermique étant plus économique dans le cas des épaisseurs relativement grandes des vitres pour des structures vitrées.

L'assemblage des vitres l'une à l'autre et avec l'élément de support est avantageusement réalisé avec un procédé d'assemblage connu en soi en utilisant la chaleur et/ou la pression. Pour la couche de liaison organique, une feuille adhésive thermoplastique en polyvinylbutyral s'est révélée adéquate. On peut cependant aussi utiliser d'autres couches de liaison organiques appropriées, si elles donnent seulement une adhérence suffisamment élevée et que leur capacité de résister aux agents chimiques et physiques ambiants est suffisante. Dans ce cas, le procédé d'assemblage doit naturellement être choisi en conséquence.

Les couches de liaison organiques peuvent aussi remplir d'autres fonctions, par exemple d'insonorisation, de filtrage du rayonnement UV de la lumière solaire ou de coloration du vitrage en verre feuilleté. Par ailleurs, il est possible de réaliser une ou plusieurs des couches de liaison organiques assemblant les vitres individuelles et/ou l'élément de support sous la forme d'un stratifié ayant une fonction supplémentaire. Celui-ci se compose alors de deux couches de liaison, entre lesquelles est placée une autre feuille de plastique, par exemple en téréphtalate de polyéthylène. Cette feuille de plastique peut par exemple être elle-même colorée ou être pourvue d'une mince couche transparente, réfléchissant un spectre déterminé de rayonnement électromagnétique.

D'autres détails et avantages de l'objet de l'invention découleront, sans aucune intention de limitation, des dessins d'un exemple de réalisation et de sa description détaillée qui suivra.

Dans ces dessins constituant une représentation simplifiée :
- la figure 1 montre une première forme de réalisation du vitrage en verre feuilleté vissé à une infrastructure pour une structure en verre, représentée en coupe ; et
- la figure 2 montre une seconde forme de réalisation du vitrage en verre feuilleté avec une fixation supplémentaire de l'élément de support.

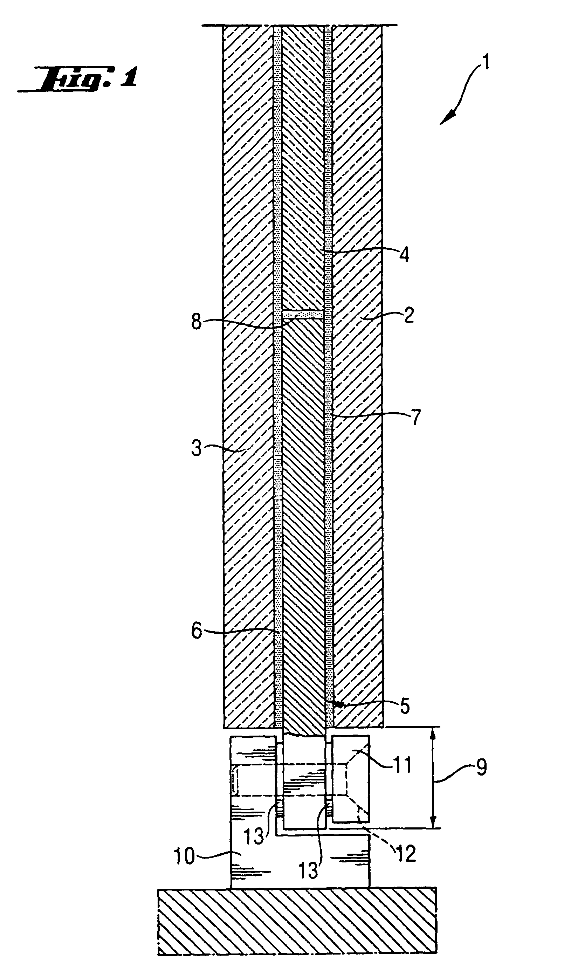

Suivant la figure 1, le vitrage en verre feuilleté 1 conforme à l'invention se compose de deux vitres individuelles extérieures 2 et 3 d'une épaisseur de 12 mm, d'une vitre centrale individuelle 4 d'une épaisseur de 10 mm, enserrée entre celles-ci, d'un élément de support 5 d'une épaisseur de 10 mm en acier allié ainsi que de trois feuilles adhésives thermoplastiques 6, 7 et 8 en polyvinylbutyral, qui forment les couches de liaison organiques. Les trois vitres 2, 3 et 4 se composant de verre sont thermiquement précontraintes. La vitre centrale 4 est placée en retrait d'environ 200 mm par rapport au bord inférieur du vitrage en verre feuilleté 1 et forme ainsi une rainure, dans laquelle l'élément de support 5 est introduit. L'élément de support 5 et la vitre centrale 4 sont collés sur toute la surface, à l'aide des feuilles adhésives thermoplastiques 6 et 7, sur les faces principales des vitres individuelles 2 et 3, qui font face à la vitre centrale 4, respectivement à l'élément de support 5. Pour éviter la formation de cavités à cause de coefficients de dilatation thermique différents et pour empêcher l'apparition de bulles de gaz, une bande de feuille adhésive thermoplastique 8 est posée entre les faces d'extrémité tournées l'une vers l'autre de la vitre centrale 4 et de l'élément de support 5.

Pendant l'opération d'assemblage avec utilisation de pression et de chaleur, ces faces d'extrémité doivent être légèrement pressées l'une contre l'autre avec interposition de la feuille adhésive 8, afin d'obtenir un collage intime et sans défauts. Le segment 9 de l'élément de support 5 en saillie au-delà de la face d'extrémité du vitrage en verre feuilleté 1 est serré dans un support 10 lié à la fondation, au moyen d'une mâchoire de serrage 11 et d'un assemblage vissé 12. Entre l'élément de support 5 et le support de fondation 10 respectivement la mâchoire de serrage 11, on peut placer des couches intermédiaires ou des rondelles d'appui 13 habituellement utilisées dans la construction en acier.

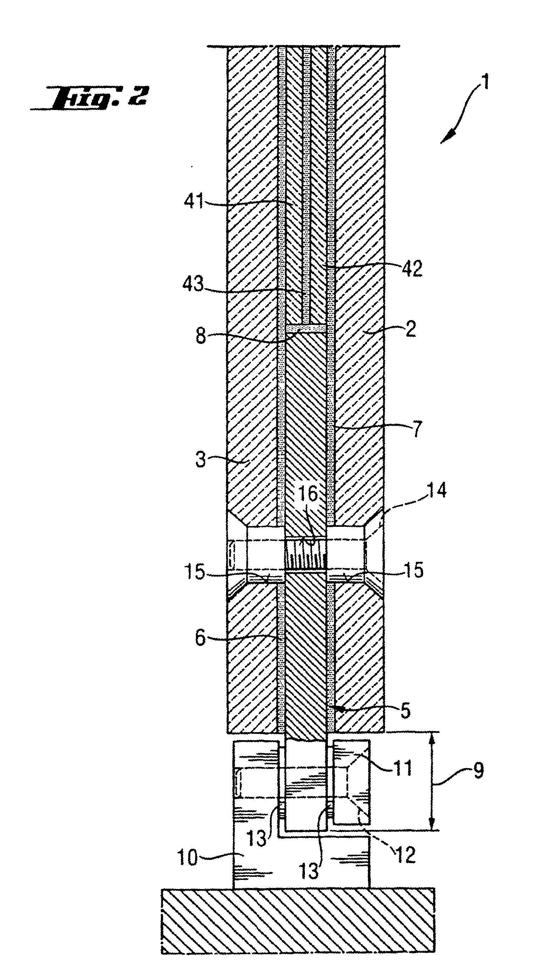

Dans la figure 2 est représentée une autre forme de réalisation du vitrage en verre feuilleté 1, dans laquelle les vitres extérieures 2 et 3 sont écartées l'une de l'autre par une vitre centrale se composant de deux vitres 41 et 42 d'une épaisseur d'environ 4 mm. Les deux vitres 41 et 42 sont à nouveau collées l'une à l'autre avec une feuille adhésive thermoplastique 43. La disposition des autres parties individuelles du vitrage en verre feuilleté 1 est analogue à celle de la représentation de la figure 1, excepté pour un assemblage vissé supplémentaire 14 de l'élément de support 5 avec les vitres individuelles 2 et 3. L'assemblage vissé 14 est réalisé sans qu'aucune partie ne dépasse dans les faces principales du vitrage en verre feuilleté 1. A cet effet, il est prévu respectivement dans les vitres individuelles 2 et 3 un trou foré chanfreiné 15, dans lequel est logé(e) la tête noyée d'une vis respectivement un écrou, le cas échéant avec interposition d'une doublure élastique. Dans l'élément de support 5 est ménagé un trou foré 16, qui est légèrement plus grand que la tige filetée de l'assemblage vissé 14. Les deux vitres individuelles 2 et 3 peuvent ainsi être serrées sur l'élément de support 5 au moyen d'un assemblage vis/écrou.

L'élément de support 5 peut s'étendre sur la totalité ou sur une partie de l'arête inférieure du vitrage en verre feuilleté 1, tout comme il est cependant également possible de disposer plusieurs éléments de support étroits espacés les uns des autres le long de l'arête inférieure du vitrage en verre feuilleté. Dans ce cas, l'espace intermédiaire entre les éléments de support doit naturellement être occupé par des saillies correspondantes de la vitre centrale 4 ou par des bandes insérées d'un matériau approprié. Bien entendu, le vitrage en verre feuilleté destiné à une structure vitrée n'est pas non plus limité à une fixation par son arête inférieure. De la même manière, on peut réaliser des éléments de support dans la face d'extrémité supérieure ou dans une face d'extrémité latérale ou dans plusieurs faces d'extrémité.

## Revendications

1. Vitrage en verre feuilleté pour une structure en verre, avec plusieurs vitres individuelles, avec chaque fois une couche de liaison organique entre deux vitres individuelles voisines et avec au moins un élément de support à rigidité propre saillant hors d'une face d'extrémité, qui présente au moins une zone en forme de plaque en un matériau plat, avec laquelle il est introduit entre deux vitres individuelles dans la région du bord du vitrage en verre feuilleté, **caractérisée en ce que** le vitrage en verre feuilleté (1) se compose d'au moins trois vitres individuelles (2, 3, 4), **en ce qu'**au moins une vitre centrale (4) logée entre deux vitres individuelles (2, 3) est placée en retrait par rapport à la région du bord du vitrage en verre feuilleté (1) en formant une rainure, dans laquelle la zone en forme de plaque de l'élément de support (5) est disposée, et **en ce que** l'élément de support (5) est assemblé aux vitres individuelles contiguës (2, 3) au moyen de couches de liaison organiques (6, 7).

2. Vitrage en verre feuilleté pour une structure en verre suivant la revendication 1, **caractérisé en ce que** la vitre centrale se compose de plusieurs vitres (41, 42).

3. Vitrage en verre feuilleté pour une structure en verre suivant La revendication 1 ou 2, **caractérisé en ce qu'**une bande d'une couche de liaison organique (8) est disposée entre les faces d'extrémités tournées l'une vers l'autre de la vitre centrale (4) et de l'élément de support (5).

4. Vitrage en verre feuilleté pour une structure en verre suivant l'une quelconque des revendications précédentes, **caractérisé en ce que** l'élément de support (5) est assemblé à au moins une vitre individuelle (2, 3) du vitrage en verre feuilleté (1) à l'aide d'un assemblage indesserrable ou indéformable (14, 15, 16) en plus des couches de liaison organiques (6, 7).

5. Vitrage en verre feuilleté pour une structure en verre suivant l'une quelconque des revendications précédentes, **caractérisé en ce qu'**il est prévu, sur le segment (9) de l'élément de support (5) débordant vers l'extérieur, des moyens pour fixer (12) le vitrage en verre feuilleté (1) à une infrastructure ou à une structure de support (10).

6. Vitrage en verre feuilleté pour une structure en verre suivant l'une quelconque des revendications précédentes, **caractérisé en ce que** l'élément de support (5) a la forme d'une plaque.

7. Vitrage en verre feuilleté pour une structure en verre suivant l'une quelconque des revendications précédentes, **caractérisé en ce que** l'élément de support (5) est fabriqué en acier allié.

8. Vitrage en verre feuilleté pour une structure en verre suivant l'une quelconque des revendications précédentes, **caractérisé en ce qu'**une ou plusieurs des vitres individuelles (2, 3, 4) sont précontraintes par voie thermique ou chimique.

9. Vitrage en verre feuilleté pour une structure en verre suivant l'une quelconque des revendications précédentes, **caractérisé en ce que** la couche de liaison organique (6, 7, 8, 43) se compose de polyvinylbutyral.

10. Vitrage en verre feuilleté pour une structure en verre suivant l'une quelconque des revendications précédentes, **caractérisé en ce qu'**une des couches de liaison organiques (6, 7, 8, 43) est un produit stratifié composé de deux couches de colle avec une feuille de plastique noyée entre elles et portant une couche fonctionnelle.

## Claims

1. Laminated glass for a glass structure, with several individual panes, each time having a layer of organic binder between two adjacent individual panes, and with at least one support element having its own inherent rigidity protruding from an end face, which has at least one region in the form of a plate made of flat material, via which it is introduced between two individual panes in the region of the edge of the laminated glass, **characterized in that** the laminated glass (1) is made up of at least three individual panes (2, 3, 4), **in that** at least a central pane (4) housed between two individual panes (2, 3) is placed set back with respect to the region of the edge of the laminated glass (1), forming a groove in which the plate-shaped region of the support element (5) is positioned, and **in that** the support element (5) is assembled with the contiguous individual panes (2, 3) by means of layers of organic binder (6, 7).

2. Laminated glass for a glass structure according to claim 1, **characterized in that** the central pane is made up of several panes (41, 42).

3. Laminated glass for a glass structure according to claim 1 or 2, **characterized in that** a strip of a layer of organic binder (8) is arranged between the end faces facing each other of the central pane (4) and of the support element (5).

4. Laminated glass for a glass structure according to any one of the preceding claims, **characterized in that** the support element (5) is assembled with at least an individual pane (2, 3) of the laminated glass (1) using a non-detachable or non-deformable assembly (14, 15, 16) in addition to the layers of organic binder (6, 7).

5. Laminated glass for a glass structure according to any one of the preceding claims, **characterized in that** there is provided, on the segment (9) of the support element (5) that protrudes outwards, means (12) for fixing the laminated glass (1) to an infrastructure or to a support structure (10).

6. Laminated glass for a glass structure according to any one of the preceding claims, **characterized in that** the support element (5) has the form of a plate.

7. Laminated glass for a glass structure according to any one of the preceding claims, **characterized in that** the support element (5) is made of steel alloy.

8. Laminated glass for a glass structure according to any one of the preceding claims, **characterized in that** one or several of the individual panes (2, 3, 4) are thermally or chemically prestressed.

9. Laminated glass for a glass structure according to any one of the preceding claims, **characterized in that** the layer of organic binder (6, 7, 8, 43) is made of polyvinylbutyral.

10. Laminated glass for a glass structure according to any one of the preceding claims, **characterized in that** one of the layers of organic binder (6, 7, 8, 43) is a layered product made up of two layers of adhesive with a sheet of plastic embedded between them and bearing a functional layer.

## Patentansprüche

1. Verbundglasscheibe für eine Glaskonstruktion, mit mehreren Einzelscheiben, mit einer organischen Verbindungsschicht zwischen jeweils zwei benachbarten Einzelscheiben und mit mindestens einem stirnseitig herausgeführten eigensteifen Halteelement, das zumindest einen plattenförmigen Bereich aus Flachmaterial aufweist, mit dem es im Randbereich der Verbundglasscheibe zwischen zwei Einzelscheiben.eingelegt ist, **dadurch gekennzeichnet, dass** die Verbundglasscheibe (1) aus wenigstens drei Einzelscheiben (2, 3, 4) besteht, dass mindestens eine von zwei Einzelscheiben (2, 3) eingeschlossene Mittelscheibe (4) im Randbereich der Verbundglasscheibe (1) unter Bildung einer Nut zurückspringt, in der der plattenförmige Bereich des Halteelements (5) angeordnet ist, und dass das Halteelement (5) mittels organischer Verbindungsschichten (6, 7) mit den angrenzenden Einzelscheiben (2, 3) verbunden ist.

2. Verbundglasscheibe für eine Glaskonstruktion nach Anspruch 1, **dadurch gekennzeichnet, dass** die Mittelscheibe aus mehreren Scheiben (41, 42) besteht.

3. Verbundglasscheibe für eine Glaskonstruktion nach Anspruch 1 oder 2, **dadurch gekennzeichnet, dass** zwischen den einander zugewandten Stimseiten der Mittelscheibe (4) und des Halteelements (5) ein Streifen einer organischen Verbindungsschicht (8) angeordnet ist.

4. Verbundglasscheibe für eine Glaskonstruktion nach einem der vorhergehenden Ansprüche, **dadurch gekennzeichnet, dass** das Halteelement (5) zusätzlich zu den organischen Verbindungsschichten (6, 7) mit Hilfe einer kraft- oder formschlüssigen Verbindung (14, 15, 16) mit mindestens einer Einzelscheibe (2, 3) der Verbundglasscheibe (1) verbunden ist.

5. Verbundglasscheibe für eine Glaskonstruktion nach einem der vorhergehenden Ansprüche, **dadurch gekennzeichnet, dass** an dem nach außen ragenden Abschnitt (9) des Halteelements (5) Mittel zum Befestigen (12) der Verbundglasscheibe (1) an einer Unter- oder Haltekonstruktion (10) vorgesehen sind.

6. Verbundglasscheibe für eine Glaskonstruktion nach einem der vorhergehenden Ansprüche, **dadurch gekennzeichnet, dass** das Halteelement (5) plattenförmig ist.

7. Verbundglasscheibe für eine Glaskonstruktion nach einem der vorhergehenden Ansprüche, **dadurch gekennzeichnet, dass** das Halteelement (5) aus Edelstahl besteht.

8. Verbundglasscheibe für eine Glaskonstruktion nach einem der vorhergehenden Ansprüche, **dadurch gekennzeichnet, dass** eine oder mehrere der Einzelscheiben (2, 3, 4) thermisch oder chemisch vorgespannt sind.

9. Verbundglasscheibe für eine Glaskonstruktion nach einem der vorhergehenden Ansprüche, **dadurch gekennzeichnet, dass** die organische Verbindungsschicht (6, 7, 8, 43) aus Polyvinylbutyral besteht.

10. Verbundglasscheibe für eine Glaskonstruktion nach einem der vorhergehenden Ansprüche, **dadurch gekennzeichnet, dass** eine der organischen Zwischenschichten (6, 7, 8, 43) ein Laminat aus zwei Klebeschichten mit einer dazwischen eingebetteten, eine Funktionsschicht tragenden Kunststofffolie ist.
